# EUROPEAN PATENT SPECIFICATION

(11) **EP 4 052 774 B1**
(45) Date of publication and mention of the grant of the patent: **01.05.2024**
(21) Application number: 19958548.0
(22) Date of filing: 30.12.2019
(51) Int. Cl.: C02F 1/44, B01D 39/16, B01D 69/10, B01D 61/14, B01D 61/02

(54) **WATER TREATMENT MEMBRANE CONTAINING WET LAID NON-WOVEN FABRIC AND PREPARATION METHOD THEREFOR**
WASSERAUFBEREITUNGSMEMBRAN MIT NASSGELEGTEM VLIESSTOFF UND VERFAHREN ZU IHRER HERSTELLUNG
MEMBRANE DE TRAITEMENT DE L'EAU CONTENANT UN TISSU NON-TISSÉ PRODUIT PAR VOIE HUMIDE ET SON PROCÉDÉ DE PRÉPARATION

(43) Date of publication of application: 07.09.2022
(73) Proprietor: Shenzhen Senior Technology Material Co., Ltd., Shenzhen, Guangdong 518106 (CN)
(72) Inventor: CHEN, Li, Shenzhen, Guangdong 518000 (CN); WU, Shuqiu, Shenzhen, Guangdong 518000 (CN)
(74) Representative: Locas, Davide
(86) International application number: PCT/CN2019/130137
(87) International publication number: WO 2021/134312

(56) References cited:
- EP-B1- 1 044 719
- WO-A1-2017/159457
- WO-A1-2019/202213
- CN-A- 101 226 994
- CN-A- 101 680 185
- CN-A- 104 147 939
- CN-A- 105 498 550
- CN-A- 107 913 606
- JP-A- H01 299 607
- US-A1- 2012 219 756
- US-A1- 2015 251 138
- US-A1- 2015 251 138
- US-A1- 2016 038 864

## Description

### Technical Field

The present disclosure belongs to the technical field of non-woven fabric materials, and more particularly, relates to a water treatment membrane comprising a wet-laid non-woven fabric used as a support layer thereof.

### Background Art

Water treatment membrane technology is currently mainly used in the fields of sewage treatment, water supply purification, seawater desalination and pure water preparation, etc. Depending on the different manufacturing materials, the water treatment membranes can be divided into inorganic membranes and organic membranes. The inorganic membranes mainly comprise ceramic membranes, glass membranes and metal membranes, with low filtration accuracy and low selectivity. For the organic membranes, polymer materials, such as cellulose resin, polyvinyl alcohol resin, polysulfone resin, polyamide resin, polyimide resin, etc., are selected as the raw materials, depending on different separation purposes. The organic membranes, due to high filtration accuracy and high selectivity, are widely used in the water resource field and the fields, such as industrial special separation and the like.

However, the polymer functional layer of the organic water treatment membrane (referred to as "water treatment membrane" for short hereinafter) has low mechanical strength and cannot withstand the high hydraulic pressure in the separation process when used alone and therefore, non-woven fabrics are usually used as the supporting layer for it, so as to provide the structural strength.

In order to ensure the high liquid flow and high filtration performance of the water treatment membrane, the requirements on the pore size and its distribution of the functional layer thereof are high. For this reason, the non-woven fabric as the support layer must also be controlled to have the appropriate pore size and uniform pore size distribution.

For example, WO2019202213A1 discloses a fibrous filtration media and methods of making and using the same whereby the media includes a wet-laid nonwoven fibrous web having from about 20 wt.% to about 80 wt.%, based on total weight of fibrous web, of bicomponent staple fibers, and from about 10 wt.% to about 50 wt.%, based on total weight of the fibrous web, of fibrillated lyocell staple fibers.

Polyester non-woven fabrics are usually prepared by a single-layer bonding process. However, compared with the double-layer or multi-layer bonding processes, the single-layer bonding tends to produce large through holes, especially in the parts where the fibers are not uniformly dispersed, and the through holes of the non-woven fabric often lead to that pinholes appear in the coating layer of the water treatment membrane, which is a fatal defect for the water treatment membrane, especially the reverse osmosis membrane, since the high filtration performance of the membrane can no longer be guaranteed.

US 2012/219756 A1 discloses a two layer non-woven support for a membrane.

### Summary

The present disclosure relates to a water treatment membrane according to claim 1.

The water treatment membrane comprises a wet-laid non-woven fabric, wherein the wet-laid non-woven fabric has an average pore size not greater than 10 µm, a maximum pore size not greater than 40 µm, and a maximum pore size/average pore size ratio (i.e. a ratio of the maximum pore size to the average pore size) not less than 1 and not greater than 12.

In one or more embodiments, the maximum pore size/average pore size ratio of the wet-laid non-woven fabric is not less than 1 and not greater than 8, and preferably not less than 1 and not greater than 6.

In one or more embodiments, the average pore size of the wet-laid non-woven fabric is not greater than 15 µm, preferably not greater than 10 µm, and more preferably not greater than 8 µm.

In one or more embodiments, the maximum pore size of the wet-laid non-woven fabric is not greater than 35 µm, and preferably not greater than 30 µm.

The wet-laid non-woven fabric, as a whole, is of a single-layer structure formed of at least two layers combined together and which cannot be separated with each other.

The at least two layers comprise a first layer and a second layer, and a fibre diameter of fibers of the first layer and a fibre diameter of fibers of the second layer are different.

The at least two layers comprise a first layer and a second layer, and the fibers of the first layer comprise two or more kinds of fibers with different fibre diameters; and
the second layer comprises two or more kinds of fibers with different fibre diameters.

The first layer is composed of backbone fibers with a fibre diameter not greater than 9.20 µm and binder fibers with a fibre diameter not greater than 11.27 µm, and the second layer is composed of backbone fibers with a fibre diameter not greater than 13.01 µm and binder fibers with a fibre diameter not greater than 14.55 µm.

In one or more embodiments, the fibre diameter of the backbone fibers of the first layer is not greater than that of the backbone fibers of the second layer, and the fibre diameter of the binder fibers of the first layer is not greater than that of the binder fibers of the second layer.

In one or more embodiments, the fibre diameter of the backbone fibers of the first layer is not greater than 8.23 µm, e.g., not greater than 7.70 µm, and e.g., between 6.51-7.70 µm.

In one or more embodiments, the fibre diameter of the backbone fibers of the second layer is not greater than 12.35 µm, e.g., not greater than 12.00 µm, and e.g., between 6.51-12.00 µm.

In one or more embodiments, the fibre diameter of the binder fibers of the first layer is not greater than 10.89 µm, e.g., not greater than 10.49 µm, and e.g., between 9.65-10.49 µm.

In one or more embodiments, the fibre diameter of the binder fibers of the second layer is not greater than 10.89 µm, e.g., not greater than 10.49 µm, and e.g., between 9.65-10.49 µm.

In one or more embodiments, a fiber length of the backbone fibers of the first layer is 1-7 mm, e.g., 3-6 mm.

In one or more embodiments, a fiber length of the backbone fibers of the second layer is 1-7 mm and preferably 3-6 mm.

In one or more embodiments, a fiber length of the binder fibers of the first layer is 1-7 mm, and preferably 3-6 mm.

In one or more embodiments, a fiber length of the binder fibers of the second layer is 1-7 mm, and preferably 3-6 mm.

In one or more embodiments, a mass fraction of binder fibers of the first layer is 20-40%, and a mass fraction of backbone fibers thereof is 60-80%.

In one or more embodiments, a mass fraction of binder fibers of the second layer is 20-40%, and a mass fraction of backbone fibers thereof is 60-80%.

In one or more embodiments, the wet-laid non-woven fabric has a surface density of 60-100 g/m², a density of 0.70-1.05 g/cm³, and an air permeability of 0.5-4.0 cc/cm²/sec, and a transverse tensile strength thereof is >35 N/15mm, and/or a longitudinal tensile strength/transverse tensile strength ratio (i.e. a ratio of the longitudinal tensile strength to the transverse tensile strength) thereof is 1.2-4.

The wet-laid non-woven is made of at least one of following: polyester fibers, such as polyethylene terephthalate fibers; viscose fibers; and acrylic fibers, and preferably is made of polyester fibers.

The backbone fibers are at least one of following: polyester fibers, such as polyethylene terephthalate fibers; viscose fibers; and acrylic fibers, and preferably are polyester fibers.

The binder fiber of the first layer and the binder fiber of the second layer are each independently at least one selected from the group consisting of undrawn polyester binder fibers, polyolefin fibers, and core-sheath binder fibers.

In one or more embodiments, the undrawn polyester binder fibers are undrawn polyethylene terephthalate fibers.

As used herein, the undrawn polyester binder fibers generally refer to undrawn polyester fibers. Because of being not drawn, they have a relatively low melting point and are suitable for being used as binder fibers. For example, typical undrawn polyester binder fibers are undrawn polyethylene terephthalate fibers.

In one or more embodiments, the core-sheath binder fiber is at least one selected from the group consisting of CoPET/PET sheath-core fibers, PE/PET sheath-core fibers.

The first layer of raw material forms a first surface of the wet-laid non-woven fabric, wherein the first surface is coated with a water treatment membrane material.

The present disclosure is also related to a method of preparing the water treatment membrane herein, the method comprising a hot pressing step.

In one or more embodiments, the wet-laid non-woven fabric is a wet-laid non-woven fabric according to one or more embodiments herein, and the method comprises: performing paper-making on the first layer of raw material to obtain a first base paper and performing paper-making on the second layer of raw material to obtain a second base paper, and performing hot pressing compounding on the first base paper and the second base paper.

In one or more embodiments, the hot pressing or the hot pressing compounding is performed using a steel roller/steel roller hot pressing machine; or the hot pressing or the hot pressing compounding is performed using a steel roller/soft roller hot pressing machine.

In one or more embodiments, the method herein further comprises a step of dispersing fibers using a conical fiberizer before the paper-making.

In one or more embodiments, the water treatment membrane material is selected from the group consisting of polyvinylidene fluoride, polyacrylonitrile, polyamide, cellulose acetate, polyethylene, polyvinyl chloride, polysulfone and combinations thereof, and preferably is polysulfone, such as polyethersulfone.

In one or more embodiments, the water treatment membrane is one or more of a reverse osmosis membrane, a nanofiltration membrane, an ultrafiltration membrane and a microfiltration membrane.

### Brief Description of Drawings

In order to illustrate the technical solutions of the embodiments of the present disclosure more clearly, the drawings required to be used in the embodiments will be briefly introduced below. It should be understood that the following drawings only show some embodiments of the present disclosure.

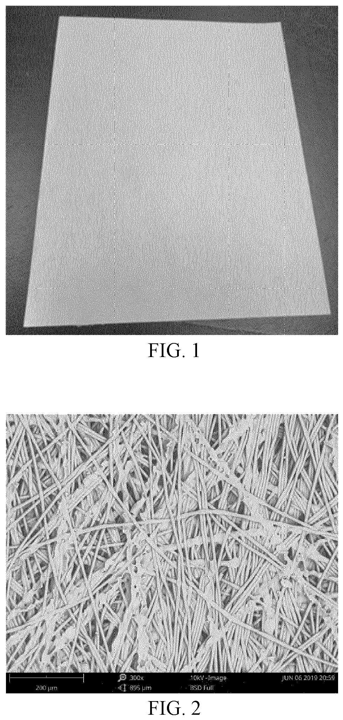

FIG. 1 is a photograph of the non-woven fabric sample (A4 size) described in Embodiment 1 of the present disclosure;
FIG. 2 is an electron microscope image of the non-woven fabric sample described in Embodiment 1 of the present disclosure;

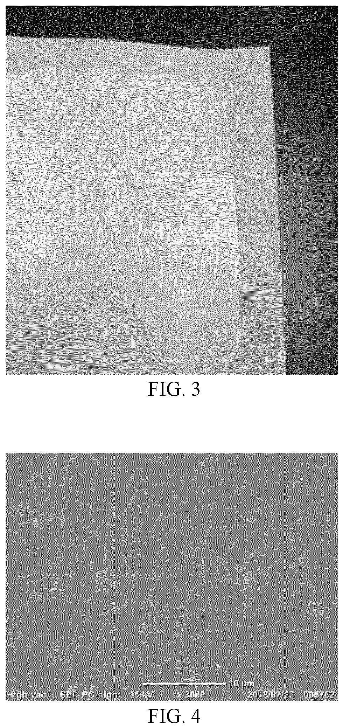

FIG. 3 is a photograph of the Embodiment Sample 1 described in Embodiment 1 of the present disclosure;
FIG. 4 is an electron microscope image of the surface of the coating layer of the Embodiment Sample 1 described in Embodiment 1 of the present disclosure;

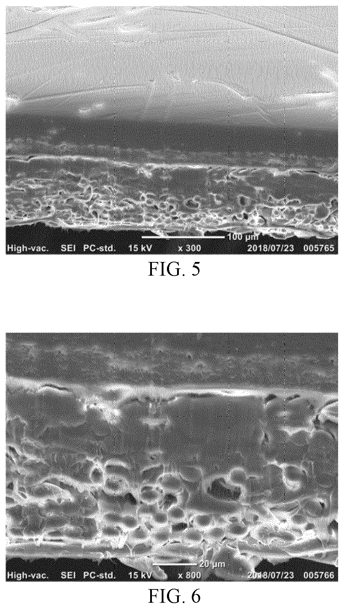

FIG. 5 is an electron microscope image of the cross-section of the Embodiment Sample 1 described in Embodiment 1 of the present disclosure; and
FIG. 6 is an enlarged electron microscope image of the cross-section of the Embodiment Sample 1 in Embodiment 1 of the present disclosure.

### Detailed Description of Embodiments

In order to make the objectives, technical solutions and advantages of the embodiments of the present disclosure clearer, the technical solutions in the embodiments of the present disclosure will be described clearly and completely below. If the specific conditions are not indicated in the embodiments, the conventional conditions or the conditions suggested by the manufacturer shall be followed. The reagents or instruments used without the manufacturer indicated are conventional products that can be purchased from the market.

Unless otherwise defined herein, scientific and technical terms used in connection with the present disclosure shall have the meanings commonly understood by those of ordinary skill in the art. Exemplary methods and materials are described below, but methods and materials similar or equivalent to those described herein can also be used in the practice or testing of the present disclosure.

The present disclosure provides a wet-laid non-woven fabric, wherein the wet-laid non-woven fabric has an average pore size not greater than 20 µm, a maximum pore size not greater than 40 µm, and a maximum pore size/average pore size ratio not less than 1 and not greater than 12.

In one or more embodiments, the maximum pore size/average pore size ratio of the wet-laid non-woven fabric is not less than 1 and not greater than 8, and preferably not less than 1 and not greater than 6.

In one or more embodiments, the average pore size of the wet-laid non-woven fabric is not greater than 15 µm, preferably not greater than 10 µm, and more preferably not greater than 8 µm.

In one or more embodiments, the maximum pore size of the wet-laid non-woven fabric is not greater than 35 µm, and preferably not greater than 30 µm.

In the process of preparing water treatment membranes, when the average pore size is greater than 20 µm and the maximum pore size is greater than 40 µm, the casting liquid easily penetrates from the upper layer to the lower layer, producing through holes on the coating layer, and finally the casting liquid is adhered to the surface of a guide roller, causing contamination of the foreign body. In contrast, when the pore size is too small, the penetration of the coating liquid on the surface of the non-woven fabric is not deep enough, which easily leads to that the bonding force of the coating layer acting on the support layer is insufficient. In addition, when in the case that the maximum pore size /average pore size ratio is greater than 12, the air entrained in the non-woven fabric is exchanged, at a rate which is not uniform, with water during the phase separation process, at the rate is not uniform, which will affect the uniformity of the membrane formed by curing of the coating layer. Therefore, in one or more embodiments of the present disclosure, the maximum pore size/average pore size ratio is controlled within a range not less than 1 and not greater than 12, for ensuring the uniform distribution of pore size of the non-woven fabric. In order to ensure a lower maximum pore size/average pore size ratio, in one or more embodiments, the dispersion of fibers is performed using a conical fiberizer.

The wet-laid non-woven fabric, as a whole, is of a single-layer structure, which is formed from at least two layers combined together.

As used herein, the expression "as a whole, is of single-layer structure" means that the non-woven fabric is a non-woven fabric as one-piece, instead of plural separate layers, and however the wet-laid non-woven fabric, which as a whole is of a single-layer structure, may be composed of two or more layers combined with each other (e.g., by welding). Therefore, in the present disclosure, the non-woven fabric comprises two or more layers, which are combined with and cannot be separated with each other.

The at least two layers comprise a first layer and a second layer. The fibre diameter of fibers of the first layer and the fibre diameter of fibers of the second layer are different from each other. The first layer and the second layer are combined with or bonded to each other. In one or more embodiments, the first layer and the second layer are welded (butt fused) to each other. In one or more embodiments, the first layer and the second layer are combined or bonded together by thermal bonding.

The at least two layers comprise a first layer and a second layer. The fibers of the first layer comprise two or more kinds of fibers with different fibre diameters; and the second layer comprises two or more kinds of fibers with different fibre diameters.

The non-woven fabric described in the present disclosure is of a single-layer structure which is formed by thermally calendaring and compounding at least two layers of base paper of raw materials with different fiber fiber diameters. The reason for the double-layer composite structure being adopted is that when the through holes appear in only one layer, the other layer can cover them, thereby avoiding the through holes passing through the two layers from being produced in the non-woven fabric. When the two layers of base paper are thermally calendered and compounded, the temperature range used is 220-230°C. The combination of hot pressing rollers can be the metal roller/metal roller combination or the metal roller/soft roller combination. The metal roller/metal roller combination is easy to control the effects and physical properties of the thermal attaching (bonding), and the metal roller/soft roller combination is easy to control the thickness consistency. In addition, the double-layer structure can also be directly prepared by a wet-laid papermaking process, such as, a double-layer inclined wire paper machine or an inclined wire-rotary wire composite paper machine, and then the heat-pressing is performed to fix the wire.

The first layer is composed of backbone fibers with the fibre diameter not greater than 9.20 µm and binder fibers with the fibre diameter not greater than 11.27 µm, and the second layer is composed of backbone fibers with the fibre diameter not greater than 13.01 µm and binder fibers with the fibre diameter not greater than 14.55 µm.

The first layer is also referred to as the upper layer, with its surface used to be coated with the water treatment membrane material, i.e., the casting liquid.

The second layer is also referred to as the lower layer.

If in the upper layer, the fibre diameter of the backbone fibers is higher than 9.20 µm and the fibre diameter of the binder fibers is higher than 11.27 µm, it will increase the possibility of producing large pores and will not help the reductions of the average pore size and the maximum pore size, and the casting liquid will easily penetrate from the upper layer to the lower layer via the through holes, thereby increasing the possibility of defects, such as, pinholes being produced in the coating layer. If in the lower layer, the fibre diameter of the backbone fibers is higher than 13.01 µm and the fibre diameter of the binder fibers is higher than 14.55 µm, it will increase the possibility of producing large pores and will not help the reductions of the average pore size and the maximum pore size.

In one or more embodiments, the fibre diameter of the backbone fibers of the first layer is not greater than the fibre diameter of the backbone fibers of the second layer, and the fibre diameter of the binder fibers of the first layer is not greater than the fibre diameter of the binder fibers of the second layer.

In the present disclosure, by using respectively the fibers with different fibre diameters in the upper layer and the lower layer, with the fibre diameter of fibers of the upper layer not greater than that of fibers of the lower layer, the air entrained in the lower layer can quickly escape during the phase separation process, thus preventing that the air remains in the lower layer and enters the coating layer to form bubbles, the small bubbles converge into large bubbles, and finally large pinholes are formed in the coating layer.

In one or more embodiments, the fibre diameter of the backbone fibers of the first layer is not greater than 8.23 µm, or no greater than 7.70 µm, or between 6.51-7.70 µm.

In one or more embodiments, the fibre diameter of the binder fibers of the first layer is not greater than 10.89 µm, preferably not greater than 10.49 µm, and more preferably between 9.65-10.49 µm.

In one or more embodiments, the fibre diameter of the backbone fibers of the second layer is not greater than 12.35 µm, preferably not greater than 12.00 µm, and more preferably, between 6.51-12.00 µm.

In one or more embodiments, the fibre diameter of the binder fibers of the second layer is not greater than 10.89 µm, preferably no greater than 10.49 µm, and more preferably between 9.65-10.49 µm.

If in the lower layer, the fibre diameter of the backbone fibers is higher than 13.01 µm and the fibre diameter of the binder fibers is higher than 14.55 µm, it will increase the possibility of producing large pores and will not help to reduce the average pore size and maximum pore size.

In one or more embodiments, the fiber length of the backbone fibers of the first layer is 1-7 mm, and preferably 3-6 mm.

In one or more embodiments, the fiber length of the backbone fibers of the second layer is 1-7 mm, and preferably 3-6 mm.

In one or more embodiments, the fiber length of the binder fibers of the first layer is 1-7 mm, and preferably 3-6 mm.

In one or more embodiments, the fiber length of the binder fibers of the second layer is 1-7 mm, and preferably 3-6 mm.

In one or more embodiments, in the first layer, the mass fraction of binder fibers is 20-40%, and the mass fraction of backbone fibers is 60-80%.

In one or more embodiments, in the second layer, the mass fraction of binder fibers is 20-40%, and the mass fraction of backbone fibers is 60-80%.

In one or more embodiments, the surface density of the wet-laid non-woven fabric is 60-100 g/m².

The non-woven fabric disclosed in the present disclosure has a surface density of 60-100 g/m². When the surface density is less than 60 g/m², it will be difficult for the water treatment membrane to maintain sufficient tensile strength, especially the transverse strength, and the water treatment membrane will not be able to withstand high hydraulic pressure, and will even crack. In addition, when the surface density is too low, the coating liquid may permeate from the upper surface of the non-woven fabric to the lower surface thereof. On the contrary, if the surface density is greater than 100 g/m², under the same density, the thickness will become too large, which will make it impossible to assemble a sufficient filtration area when assembling a filter membrane assembly of a certain specification.

In one or more embodiments, the wet-laid non-woven fabric has a density of 0.70-1.05 g/cm³.

The non-woven fabric described in the present disclosure has a density of 0.70-1.05 g/cm³. When the density is less than 0.70 g/cm³, the penetration of the coating liquid on the surface of the non-woven fabric is too much, and it is easy to penetrate from the upper surface to the lower surface. When the density is greater than 1.05 g/cm³, the penetration of the coating liquid on the surface of the non-woven fabric is not deep enough, which easily leads to insufficient bonding force of the coating layer to the support layer.

In one or more embodiments, the air permeability of the wet-laid non-woven fabric is 0.5-4.0 cc/cm²/sec.

The non-woven fabric described in the present disclosure has an air permeability value of 0.5-4.0 cc/cm²/sec. When the air permeability value is lower than 0.5 cc/cm²/sec, more hydraulic pressure needs to be applied during the filtration process of the water treatment membrane, which makes the filtration efficiency very low. When the air permeability is greater than 4.0 cc/cm²/sec, the pore size of the coating layer is too large, which reduces the filtration efficiency and makes it difficult to obtain good filtration performance.

In one or more embodiments, the transverse tensile strength of the wet-laid non-woven fabric is >35 N/15 mm.

In one or more embodiments, the longitudinal tensile strength/transverse tensile strength ratio of the wet-laid non-woven fabric is 1.2-4.

The non-woven fabric described in the present disclosure has a transverse tensile strength >35 N/15 mm, and a longitudinal tensile strength/transverse tensile strength ratio of 1.2-4. If the tensile strength in the transverse direction is <35 N/15 mm, the strength is too weak, it will be difficult to perform coating on the production line, and even tearing will occur. If the longitudinal tensile strength/transverse tensile strength ratio is greater than 4, longitudinal wrinkles may sometimes occur, which may be related to thermal shrinkage in the transverse direction during thermal calendering. At conditions of low surface density and low density, the tensile strength in the transverse direction will be close to the lower limit specified in this disclosure, which is 35 N/15 mm, and the use of core-sheath bonding fibers in combination with a single binder fiber is an effective improvement method under these conditions, facilitating the increase in the strength.

In conclusion, the present disclosure reduces the probability of defects in the coating layer of the water treatment membrane material, especially pinholes in the coating layer, by controlling the pore size and pore size distribution of the non-woven fabric. By using fibers of different fibre diameters in the upper layer and the lower layer respectively, and making the fibre diameter of the fibers of the upper layer not greater than that of the lower layer, the rapid exchange of water, air and solvent in the casting liquid during the phase separation of the coating layer is realized, thereby reducing the hole defects of the coating layer.

The wet-laid non-woven fabric is made of at least one of the following: polyester fibers such as polyethylene terephthalate fibers; viscose fibers; and acrylic fibers.

In one or more embodiments, the wet-laid non-woven fabric is made of polyester fibers.

The backbone fibers are at least one of following: polyester fibers, such as polyethylene terephthalate fibers; viscose fibers; and acrylic fibers.

In one or more embodiments, the backbone fibers are polyester fibers.

In one or more embodiments, the binder fibers may be any one or combination of undrawn polyester binder fibers, polyolefin fibers and core-sheath binder fibers. The undrawn polyester binder fibers are preferably undrawn polyethylene terephthalate fibers, and the core-sheath binder fibers can be CoPET/PET sheath-core fibers, PE/PET sheath-core fibers, etc.

The first layer of raw material forms a first surface of the wet-laid non-woven fabric, and the first surface is coated with a water treatment membrane material.

The present disclosure also provides a method for preparing the water treatment membrane described in the present disclosure, which comprises a paper-making step and a hot pressing step.

In one or more embodiments, the method comprises performing paper-making on the raw material of the first layer to obtain first base paper, performing paper-making on the raw material of the second layer to obtain second base paper, and performing hot pressing compounding on the first base paper and the second base paper.

In one or more embodiments, the hot pressing or hot pressing compounding is performed using a steel roller/steel roller hot pressing machine; or the hot pressing or hot pressing compounding is carried out using a steel roller/soft roller hot pressing machine.

The present disclosure provides a water treatment membrane, comprising
the wet-laid non-woven fabric described in the present disclosure, and
a water treatment membrane material coated on the wet-laid non-woven fabric.

In one or more embodiments, the water treatment membrane material is selected from the group consisting of polyvinylidene fluoride, polyacrylonitrile, polyamide, cellulose acetate, polyethylene, polyvinyl chloride, polysulfone, and combinations thereof, and preferably is polysulfone, such as polyethersulfone.

In one or more embodiments, the water treatment membrane is one or more of a reverse osmosis membrane, a nanofiltration membrane, an ultrafiltration membrane and a microfiltration membrane.

### Embodiment 1

A wet-laid polyester non-woven fabric used as a support layer of a water treatment membrane in this embodiment has specific fiber proportions as shown in Table 1 below.

**Table 1**

| | Upper base paper | | | Lower base paper | | |
|---|---|---|---|---|---|---|
| | Fiber | Fiber | Mass | Fiber | Fiber | Mass |
| | diameter | length | fraction/% | diameter | length | fraction/% |
| Polyethylene terephthalate backbone fiber | 7.13 µm | 3 mm | 60 | 12.00 µm | 3 mm | 70 |
| Undrawn polyethylene terephthalate binder fiber | 10.08 µm | 3 mm | 40 | 10.08 µm | 3 mm | 30 |

A conical fiberizer was used for the dispersion of polyester fibers, and then an inclined wire paper machine was used to prepare upper base paper with a surface density of 37.7 g/m² and lower base paper with a surface density of 37.9 g/m², and then the two layers of base paper were subjected to hot pressing compounding, with the hot pressing machine adopting a steel roller/steel roller combination, to obtain a polyester non-woven fabric with a surface density of 75.6 g/m².

Next, the obtained polyester non-woven fabric was cut to give samples of A4 size, and a polysulfone layer was coated on the outer surface of the upper layer of the sample, wherein the coating liquid composition was 7.5% polysulfone/92.5% N-methylpyrrolidone by weight. After the coating, it was immersed in water for phase separation, taken out after 10 minutes and dried at a room temperature to finally obtain Embodiment Sample 1.

### Embodiment 2

Embodiment Sample 2 was obtained by the same method as in Embodiment 1, except that the hot pressing machine adopts a steel roller/soft roller combination.

### Embodiment 3

A wet-laid polyester non-woven fabric used as a support layer of a water treatment membrane in this embodiment has specific fiber proportions as shown in Table 2 below.

**Table 2**

| | Upper base paper | | | Lower base paper | | |
|---|---|---|---|---|---|---|
| | Fiber diameter | Fiber length | Mass fraction/% | Fiber Specification | Fiber length | Mass fraction/% |
| Polyethylene terephthalate backbone fiber | 7.13 µm | 3 mm | 65 | 7.13 µm | 3 mm | 65 |
| Undrawn polyethylene terephthalate binder fiber | 10.08 µm | 3 mm | 35 | 10.08 µm | 3 mm | 35 |

The preparation process of the non-woven fabric is the same as that of the above-mentioned Embodiment 1, and the hot pressing machine adopts a steel roller/steel roller combination to obtain a polyester non-woven fabric with a surface density of 74.5 g/m².

Next, the obtained polyester non-woven fabric was cut to give samples of A4 size, and a polysulfone layer was coated on the outer surface of the upper layer of the sample, wherein the coating liquid composition was 7.5% polysulfone/92.5% N-methylpyrrolidone by weight. After the coating, it was immersed in water for phase separation, taken out after 10 minutes, and dried at a room temperature to finally obtain Embodiment Sample 3.

### Comparative Embodiment 1

The specific fiber proportions are shown in Table 3 below

**Table 3**

| | Upper base paper | | | Lower base paper | | |
|---|---|---|---|---|---|---|
| | Fiber | Fiber | Mass | Fiber | Fiber | Mass |
| | diameter | length | fraction/% | diameter | length | fraction /% |
| Polyethylene terephthalate backbone fiber | 12.00 µm | 5 mm | 60 | 15.94 µm | 5 mm | 70 |
| Undrawn polyethylene terephthalate binder fiber | 13.01 µm | 5 mm | 40 | 14.55 µm | 5mm | 30 |

A conical fiberizer was used for the dispersion of polyester fibers, and then an inclined wire paper machine was used to prepare upper base paper with a surface density of 37.5 g/m² and lower base paper with a surface density of 37.9 g/m², and then the two layers of base paper were subjected to hot pressing compounding, with the hot pressing machine adopting a steel roller/steel roller combination, to obtain a polyester non-woven fabric with a surface density of 75.6 g/m². Next, the obtained polyester non-woven fabric was cut to give samples of A4 size, and a polysulfone layer was coated on the outer surface of the upper layer of the sample, wherein the coating liquid composition was 7.5% polysulfone/92.5% N-methylpyrrolidone by weight. After the coating, it was immersed in water for phase separation, taken out after 10 minutes and dried at a room temperature to finally obtain a Comparative Embodiment Sample 1.

### Performance Testing

In the embodiment of this patent, reference standards for the relevant technical indices of the wet-laid polyester non-woven fabric used as the support layer of the water treatment membrane were as follows: the "surface density" of the polyester non-woven fabric was determined according to GB/T 451.2-2002; the "density" of the polyester non-woven fabrics was obtained by dividing the "surface density" of the polyester non-woven fabrics and the "thickness" of the polyester non-woven fabrics; the "thickness" of the polyester non-woven fabrics was determined according to GB/T 451.3-2002 method; the "air permeability" of the polyester non-woven fabrics was determined according to GB/T 24218.15-2018 method; the "pore size" of the polyester non-woven fabrics was determined according to GB/T 32361-2015 method; and the "tensile strength" of the polyester non-woven fabric was determined according to GB/T 12914-2008 method.

The performances of the samples of Embodiments 1 to 3 and the samples of the Comparative Embodiment were tested respectively, and the test results were shown in Table 4 below.

It can be seen from Table 4 that the samples of Embodiments 1-3 of the present disclosure have good performances, especially the two performances, number of pinholes and penetration of the coating liquid to backside, that is, they have no pinholes or the situation that the coating liquid penetrates to the backside. However, the Comparative Embodiment Sample has the average pore size of 16.1 µm, the maximum pore size of 134 µm, and the maximum pore size/average pore size ratio of 8.3, the coating layer of the water treatment membrane prepared therefrom has more than 100 pinholes, and the amount of the coating liquid penetrating to the backside is greater than 0.2 m²/m². Therefore, the performances of the water treatment membranes prepared in the Embodiments of the present disclosure are significantly better than those of the water treatment membranes obtained in the Comparative Embodiment.

**Table 4**

| | **Polyester non-woven fabric** | | | | | | | | **Coating layer** | |
|---|---|---|---|---|---|---|---|---|---|---|
| | Surface density | Densi ty | Air permea bility | Aver age pore size | Maxi mum pore size | Maxim um pore size/ave rage pore size | Transv erse tensile strengt h | Longitu dinal tensile strength /transve rse tensile strength ratio | Numb er of pinhol es | Coatin g liquid penetra ting to backsi de |
| | g/m² | g/cm ³ | cc/cm²/s | µm | µm | | N/15m m | | pinhol e/m² | m²/m² |
| **Em bodi men t 1 sam ple** | 75.6 | 0.76 | 2.2 | 7.7 | 30 | 3.9 | 42 | 1.8 | 0 | 0 |
| **Em bodi men t 2 sam ple** | 76.1 | 0.82 | 1.7 | 6.1 | 25 | 4.1 | 51 | 2.0 | 0 | 0 |
| **Em bodi men t 3 sam ple** | 74.5 | 0.80 | 1.9 | 4.9 | 19 | 3.9 | 67 | 2.1 | 0 | 0 |
| **Co mpa rati ve emb odi men t sam ple** | 75.4 | 0.71 | 2.7 | 16.1 | 134 | 8.3 | 37 | 2.5 | >100 | >0.2 |

The above are only preferred embodiments of the present disclosure, and are not intended to limit the present disclosure. For those skilled in the art, the present disclosure may have various modifications and variations within the scope of the claims.

### Industrial Applicability

The present disclosure reduces the probability of occurrence of defects in the coating layer of the water treatment membrane material, especially pinholes in the coating layer, by controlling the pore size and pore size distribution of the polyester non-woven fabric. By using fibers of different fibre diameter in the upper layer and the lower layer respectively, and making the fibre diameter of the fibers of the upper layer not greater than that of the lower layer, the rapid exchange of water, air and solvent in the casting liquid during the phase separation of the coating layer is realized, thereby reducing generation of hole defects of the coating layer.

## Claims

1. A water treatment membrane, comprising:
a wet-laid non-woven fabric, wherein the wet-laid non-woven fabric has an average pore size not greater than 10 µm, a maximum pore size not greater than 40 µm, and a maximum pore size/average pore size ratio not less than 1 and no greater than 12;
the wet-laid non-woven fabric, as a whole, is of a single-layer structure formed of at least two layers which are combined together with, and which cannot be separated with each other, wherein the at least two layers comprise a first layer and a second layer, the first layer forming a first surface of the wet-laid non-woven fabric;
the first layer is composed of backbone fibers with a fiber diameter not greater than 9.20 µm and binder fibers with a fiber diameter not greater than 11.27 µm, and the second layer is composed of backbone fibers with a fiber diameter not greater than 13.01 µm and binder fibers with a fiber diameter not greater than 14.55 µm; and
the fiber diameter of the backbone fibers of the first layer is not greater than that of the backbone fibers of the second layer, and the fiber diameter of the binder fibers of the first layer is not greater than that of the binder fibers of the second layer,
wherein the backbone fibers are at least one of following: polyester fibers; viscose fibers; and acrylic fibers, and
wherein the binder fibers are any one or combination of: undrawn polyester binder fibers, polyolefin fibers and core-sheath binder fibers,
**characterized in that** the water treatment membrane further comprises a water treatment membrane material, which is coated on the first surface of the first layer that is composed of the backbone fibers with the fiber diameter not greater than 9.20 µm.

2. The water treatment membrane according to claim 1, wherein a fiber diameter of fibers of the first layer and a fiber diameter of fibers of the second layer are different.

3. The water treatment membrane according to claim 1, wherein fibers of the first layer comprise two or more kinds of fibers with different fiber diameters; and
the second layer comprises two or more kinds of fibers with different fiber diameters.

4. The water treatment membrane according to claim 1, wherein the maximum pore size/average pore size ratio of the wet-laid non-woven fabric is not less than 1 and not greater than 6.

5. The water treatment membrane according to claim 4, wherein the fiber diameter of the backbone fibers of the first layer is not greater than 8.23 µm;
the fiber diameter of the backbone fibers of the second layer is not greater than 12.35 µm;
the fiber diameter of the binder fibers of the first layer is not greater than 10.89 µm; and/or,
the fiber diameter of the binder fibers of the second layer is not greater than 10.89 µm .

6. The wet-laid non-woven fabric according to claim 4, wherein a fiber length of the backbone fibers of the first layer is 1-7 mm;
a fiber length of the backbone fibers of the second layer is 1-7 mm;
a fiber length of the binder fibers of the first layer is 1-7 mm; and/or
a fiber length of the binder fibers of the second layer is 1-7 mm.

7. The water treatment membrane according to claim 4, wherein in the first layer, a mass fraction of the binder fibers is 20-40%, and a mass fraction of the backbone fibers is 60-80%; and/or
in the second layer, a mass fraction of the binder fibers is 20-40%, and a mass fraction of the backbone fibers is 60-80%.

8. The water treatment membrane according to claim 1, wherein the wet-laid non-woven fabric has a surface density of 60-100 g/m², a density of 0.70-1.05 g/cm³, an air permeability of 0.5-4.0 cc/cm²/sec, a transverse tensile strength of >35 N/15mm, and/or a longitudinal tensile strength/transverse tensile strength ratio of 1.2-4.

9. The water treatment membrane according to claim 1, wherein the water treatment membrane material is selected from the group consisting of polyvinylidene fluoride, polyacrylonitrile, polyamide, cellulose acetate, polyethylene, polyvinyl chloride, polysulfone and combinations thereof.

10. The water treatment membrane according to claim 9, wherein the water treatment membrane is one or more of a reverse osmosis membrane, a nanofiltration membrane, an ultrafiltration membrane and a microfiltration membrane.

11. A method of preparing the water treatment membrane according to any one of claims 1-8, comprising a paper-making step and a hot pressing step.

12. The method according to claim 11, wherein the wet-laid non-woven fabric is the wet-laid non-woven fabric according to any one of claims 2-8, and the method comprises: performing paper-making on a first layer of raw material to obtain first base paper, performing paper-making on a second layer of raw material to obtain second base paper, and performing hot pressing compounding on the first base paper and the second base paper.

## Patentansprüche

1. Wasseraufbereitungsmembran, umfassend:
- einen nassgelegten Vliesstoff, wobei der nassgelegte Vliesstoff eine durchschnittliche Porengröße von nicht mehr als 10 µm, eine maximale Porengröße von nicht mehr als 40 µm und ein Verhältnis von maximaler Porengröße zu durchschnittlicher Porengröße von nicht weniger als 1 und nicht mehr als 12 aufweist;
- wobei der nassgelegte Vliesstoff als Ganzes eine einschichtige Struktur aufweist, die aus zumindest zwei Schichten gebildet ist, die miteinander kombiniert sind und die nicht voneinander getrennt werden können, wobei die zumindest zwei Schichten eine erste Schicht und eine zweite Schicht aufweisen, wobei die erste Schicht eine erste Oberfläche des nassgelegten Vliesstoffs bildet;
- wobei die erste Schicht aus Backbone-Fasern mit einem Faserdurchmesser von nicht mehr als 9,20 µm und Bindemittelfasern mit einem Faserdurchmesser von nicht mehr als 11,27 µm besteht, und die zweite Schicht aus Backbone-Fasern mit einem Faserdurchmesser von höchstens 13,01 µm und Bindemittel-Fasern mit einem Faserdurchmesser von höchstens 14,55 µm besteht; und
- wobei der Faserdurchmesser der Backbone-Fasern der ersten Schicht nicht größer ist als der der Backbone-Fasern der zweiten Schicht, und der Faserdurchmesser der Bindemittelfasern der ersten Schicht nicht größer ist als der der Bindemittelfasern der zweiten Schicht,
- wobei die Backbone-Fasern zumindest eine der folgenden sind: Polyesterfasern, Viskosefasern oder Acrylfasern, und
- wobei die Bindemittelfasern eine beliebige oder eine Kombination aus nicht verstreckten Polyester-Bindemittelfasern, Polyolefinfasern und Kern-Mantel-Bindemittelfasern sind,
- **dadurch gekennzeichnet, dass** die Wasseraufbereitungsmembran ferner ein Wasseraufbereitungsmembranmaterial aufweist, das auf die erste Oberfläche der ersten Schicht aufgetragen ist, die aus Backbone-Fasern mit einem Faserdurchmesser von nicht mehr als 9,20 µm besteht.

2. Wasseraufbereitungsmembran nach Anspruch 1, wobei ein Faserdurchmesser der Fasern der ersten Schicht und ein Faserdurchmesser der Fasern der zweiten Schicht unterschiedlich sind.

3. Wasseraufbereitungsmembran nach Anspruch 1, wobei die Fasern der ersten Schicht zwei oder mehr Arten von Fasern mit unterschiedlichen Faserdurchmessern aufweisen; und
die zweite Schicht zwei oder mehr Arten von Fasern mit unterschiedlichen Faserdurchmessern aufweist.

4. Wasseraufbereitungsmembran nach Anspruch 1, wobei das Verhältnis von maximaler Porengröße zu durchschnittlicher Porengröße des nassgelegten Vliesstoffs nicht weniger als 1 und nicht mehr als 6 beträgt.

5. Wasseraufbereitungsmembran nach Anspruch 4, wobei der Faserdurchmesser der Backbone-Fasern der ersten Schicht nicht größer als 8,23 µm ist;
- der Faserdurchmesser der Backbone-Fasern der zweiten Schicht nicht grö-ßer als 12,35 µm ist;
- der Faserdurchmesser der Bindemittelfasern der ersten Schicht nicht grö-ßer als 10,89 µm ist; und/oder
- der Faserdurchmesser der Bindemittelfasern der zweiten Schicht nicht grö-ßer als 10,89 µm ist.

6. Nassgelegter Vliesstoff nach Anspruch 4, wobei eine Faserlänge der Backbone-Fasern der ersten Schicht 1 bis 7 mm ist,
- eine Faserlänge der Backbone-Fasern der zweiten Schicht 1 bis 7 mm ist;
- eine Faserlänge der Bindemittelfasern der ersten Schicht 1 bis 7 mm ist; und/oder
- eine Faserlänge der Bindemittelfasern der zweiten Schicht 1 bis 7 mm ist.

7. Wasseraufbereitungsmembran nach Anspruch 4, wobei in der ersten Schicht ein Massenanteil der Bindemittelfasern 20 bis 40% und ein Massenanteil der Backbone-Fasern 60 bis 80% ist, und/oder
in der zweiten Schicht ein Massenanteil des Bindemittels 20 bis 40% und ein Massenanteil des Backbone-Fasern 60 bis 80% ist.

8. Wasseraufbereitungsmembran nach Anspruch 1, wobei der nassgelegte Vliesstoff eine Oberflächendichte von 60 bis 100 g/m², eine Dichte von 0,70 bis 1,05 g/cm³, eine Luftdurchlässigkeit von 0,5 bis 4,0 cc/cm²/Sek, eine Querzugfestigkeit von >35 N/15mm und/oder ein Verhältnis von Längszugfestigkeit zu Querzugfestigkeit von 1,2 bis 4 aufweist.

9. Wasseraufbereitungsmembran nach Anspruch 1, wobei das Wasseraufbereitungsmembranmaterial aus der Gruppe ausgewählt wird, die aus Polyvinylidenfluorid, Polyacrylnitril, Polyamid, Zelluloseacetat, Polyethylen, Polyvinylchlorid, Polysulfon und Kombinationen davon besteht.

10. Wasseraufbereitungsmembran nach Anspruch 9, wobei die Wasseraufbereitungsmembran eine oder mehrere von einer Umkehrosmosemembran, Nanofiltrationsmembran, Ultrafiltrationsmembran oder Mikrofiltrationsmembran ist.

11. Verfahren zur Herstellung der Wasseraufbereitungsmembran nach einem der Ansprüche 1 bis 8, das einen Papierherstellungsschritt und einen Heißpressschritt aufweist.

12. Verfahren nach Anspruch 11, wobei der nassgelegte Vliesstoff der nassgelegte Vliesstoff nach einem der Ansprüche 2 bis 8 ist, und das Verfahren aufweist:
Durchführen einer Papierherstellung auf einer ersten Schicht aus Rohmaterial, um ein erstes Rohpapier zu erhalten, Durchführen einer Papierherstellung auf einer zweiten Schicht des Rohmaterials, um ein zweites Rohpapier zu erhalten, und Durchführen einer Heißpress-Kompoundierung auf dem ersten Rohpapier und dem zweiten Rohpapier.

## Revendications

1. Membrane de traitement de l'eau, comprenant:
une étoffe non tissée appliquée par voie humide, dans laquelle l'étoffe non tissée appliquée par voie humide a une taille de pore moyenne pas supérieure à 10 µm, une taille de pore maximale pas supérieure à 40 µm et un rapport taille de pore maximale/taille de pore moyenne non inférieur à 1 et pas supérieur à 12;
l'étoffe non tissée appliquée par voie humide, dans son ensemble, est d'une structure monocouche formée d'au moins deux couches qui sont combinées entre elles et qui ne peuvent pas être séparées l'une de l'autre, dans laquelle les au moins deux couches comprennent une première couche et une seconde couche, la première couche formant une première surface de l'étoffe non tissée appliquée par voie humide;
la première couche est composée de fibres de squelette ayant un diamètre de fibre pas supérieur à 9,20 mm et de fibres de liant dont le diamètre de fibre n'est pas supérieur à 11,27 µm, et la seconde couche est composée de fibres de squelette ayant un diamètre de fibre pas supérieur à 13,01 mm et de fibres de liant dont le diamètre n'est pas supérieur à 14,55 mm; et
le diamètre de fibre des fibres de squelette de la première couche n'est pas supérieur à celui des fibres de squelette de la seconde couche, et le diamètre de fibre des fibres de liant de la première couche n'est pas supérieur à celui des fibres de liant de la seconde couche,
dans laquelle les fibres de squelette sont au moins l'une des suivantes: fibres de polyester; fibres de viscose; et fibres acryliques, et
dans laquelle les fibres de liant sont l'une quelconque ou une combinaison de: fibres de liant en polyester non étirées, fibres de polyoléfine et fibres de liant coeur-gaine,
**caractérisée en ce que** la membrane de traitement de l'eau comprend en outre un matériau de membrane de traitement de l'eau, qui est appliqué en revêtement sur la première surface de la première couche qui est composée des fibres de squelette avec le diamètre de fibre ne dépassant pas 9,20 mm.

2. Membrane de traitement de l'eau selon la revendication 1, dans laquelle un diamètre de fibre des fibres de la première couche et un diamètre de fibre des fibres de la seconde couche sont différents.

3. Membrane de traitement de l'eau selon la revendication 1, dans laquelle les fibres de la première couche comprennent deux ou plusieurs types de fibres avec des diamètres de fibre différents; et
la seconde couche comprend deux ou plusieurs types de fibres avec des diamètres de fibre différents.

4. Membrane de traitement de l'eau selon la revendication 1, dans laquelle le rapport taille de pore maximale/taille de pore moyenne de l'étoffe non tissée appliquée par voie humide n'est pas inférieur à 1 et pas supérieur à 6.

5. Membrane de traitement de l'eau selon la revendication 4, dans laquelle le diamètre de fibres des fibres de squelette de la première couche n'est pas supérieur à 8,23 mm;
le diamètre de fibre des fibres de squelette de la seconde couche n'est pas supérieur à 12,35 µm;
le diamètre de fibre des fibres de liant de la première couche n'est pas supérieur à 10,89 mm;
et/ou
le diamètre de fibre des fibres de liant de la seconde couche n'est pas supérieur à 10,89 mm.

6. Étoffe non tissée appliquée par voie humide selon la revendication 4, dans laquelle une longueur de fibre des fibres de squelette de la première couche est de 1 à 7 mm;
une longueur de fibre des fibres de squelette de la seconde couche est de 1 à 7 mm;
une longueur de fibre des fibres de liant de la première couche est de 1 à 7 mm; et/ou
une longueur de fibre des fibres de liant de la seconde couche est de 1 à 7 mm.

7. Membrane de traitement de l'eau selon la revendication 4, dans laquelle dans la première couche, une fraction massique des fibres de liant est de 20 à 40 %, et une fraction massique des fibres de squelette est de 60 à 80 %; et/ou
dans la seconde couche, une fraction massique des fibres de liant est de 20 à 40 %, et une fraction massique des fibres de squelette est de 60 à 80 %.

8. Membrane de traitement de l'eau selon la revendication 1, dans laquelle l'étoffe non tissée appliquée par voie humide a une densité superficielle de 60 à 100 g/m², une densité de 0,70 à 1,05 g/cm³, une perméabilité à l'air de 0,5 à 4,0 cc/cm²/s, une résistance à la traction transversale > 35 N/15 mm, et/ou un rapport résistance à la traction longitudinale/résistance à la traction transversale de 1,2 à 4.

9. Membrane de traitement de l'eau selon la revendication 1, dans laquelle le matériau de membrane de traitement de l'eau est choisi dans le groupe consistant en le poly(fluorure de vinylidène), le polyacrylonitrile, le polyamide, l'acétate de cellulose, le polyéthylène, le poly(chlorure de vinyle), la polysulfone et leurs combinaisons.

10. Membrane de traitement de l'eau selon la revendication 9, dans laquelle la membrane de traitement de l'eau est une ou plusieurs d'une membrane d'osmose inverse, d'une membrane de nanofiltration, d'une membrane d'ultrafiltration et d'une membrane de microfiltration.

11. Procédé de préparation de la membrane de traitement de l'eau selon l'une quelconque des revendications 1 à 8, comprenant une étape de fabrication de papier et une étape de pressage à chaud.

12. Procédé selon la revendication 11, dans lequel l'étoffe non tissée appliquée par voie humide est l'étoffe non tissée appliquée par voie humide selon l'une quelconque des revendications 2 à 8, et le procédé comprend: la réalisation d'une fabrication de papier sur une première couche de matériau brut pour obtenir un premier papier de base, la réalisation d'une fabrication de papier sur une seconde couche de matériau brut pour obtenir un second papier de base, et la réalisation d'une combinaison par pressage à chaud sur le premier papier de base et le second papier de base.
